# EUROPEAN PATENT APPLICATION

(11) **EP 2 941 988 A1**
(43) Date of publication of application: **11.11.2015**
(21) Application number: 13869981.4
(22) Date of filing: 16.01.2013
(51) Int. Cl.: A47J 45/07, A47J 45/10, A47J 36/34

(54) **DETACHABLE HANDLE FOR COOKWARE**

(30) Priority: 02.01.2013 KR 20130000111
(71) Applicant: Kim's Handle Co., Ltd., Busan 617-826 (KR)
(72) Inventor: KIM, Jongmoon, Busan 612-824 (KR)
(74) Representative: Whitlock, Holly Elizabeth Ann
(86) International application number: PCT/KR2013/000311
(87) International publication number: WO 2014/106964

(57) **Abstract**

The present invention relates to a detachable handle for a cookware, in which a press means having a bolt structure is arranged on the rear of a handle body such that a press piece is separately pushed again using the press means after the press piece presses the outer surface of a side wall of the cookware by the rotation of a tilting lever, thus enabling the press piece that presses the outer surface of the side wall of the cookware to be more firmly compressed and fixed.

## Description

### [Technical Field]

The present invention relates to a detachable handle for cookware, and, more particularly, to a detachable handle for cookware, in which pressing means more firmly compresses a press piece which presses the outer surface of a side wall of the cookware.

### [Background Art]

In general, cookware, such as pots or pans, is containers manufactured to boil or cook foods, and includes: a container body having a receiving space to contain foods; and a handle extending from one side of the container body so that a user can hold the container body to move it to a burner or a stove.

However, the conventional handle disposed on the cookware has a problem in that it increases the volume of the container body and has a space restriction when the cookware is stored because being manufactured in an undetachable structure.

In the meantime, in order to solve the problem, Korean Patent Publication No. 10-2011-0096999 (hereinafter, called 'prior art') discloses a detachable handle for cookware.

The detachable handle for cookware according to the prior art includes: a handle body having a long hole formed in the middle; a button which is fit to a cover covering the upper surface of the handle body to be able to slide back and forth and has a retaining jaw protruding at the lower portion; a tilting lever which is joined to a shaft of the handle body, rotates on the shaft depending on external pressure, is inserted into the long hole of the handle body, and has a retaining groove which is formed at the front end and to which the retaining jaw of the button is selectively inserted and fit; a slider which is fit between the handle body and the cover and has a pressing bar bent at the front end; an operation link which is located between the slider and the tilting lever, of which both ends are respectively pin-joined to the slider and the tilting lever so as to be laid horizontally according to operation of the tilting lever, and which pushes the slider backwardly so that the pressing bar formed on the slider comes into contact with the inner circumferential surface of the cookware; and a spring which is mounted on the rear of the slider to elastically push the slider in the forward direction when the retaining jaw of the button is separated from the retaining groove of the tilting lever, thus releasing the contact state of the pressing bar.

In the prior art, the handle is detachably mounted on the side wall of the cookware when the user compresses the handle to the side wall of the cookware, but if the compression is removed or released by an external force during use, the handle may be separated inadvertently to cause an accident.

### [Prior Art Documents]

Literature 1: Korean Patent Publication No. 10-2011-0096999

### [Disclosure]

### [Technical Problem]

Accordingly, the present invention has been made in an effort to solve the above-mentioned problems occurring in the prior arts, and it is an object of the present invention to provide a detachable handle for cookware, which includes pressing means for compressing a press piece which presses the outer surface of a side wall of the cookware, thereby more firmly compressing and fixing the press piece.

It is another object of the present invention to provide a detachable handle for cookware which can be compressed and fixed even though the thickness of the side wall of the cookware is thin.

### [Technical Solution]

To achieve the above objects, the present invention provides a detachable handle for cookware including: a handle body having a retaining jaw which is bent at the front end to be caught to an inner face of a side wall of a cookware; a cam member which is connected to the handle body by a hinge and has a press piece disposed at the front end in such a way as to be compressed to an outer face of the side wall of the cookware; an operation lever which is connected to an end of the cam member by a pin, pushes the pin-connected cam member while rotating on the pin depending on a pressing action from the outside in a state where the middle part of the operation lever is connected with the handle body by a connection rod, rotates the cam member on the hinge so that the press piece is compressed and fixed to the outer face of the side wall of the cookware; a release button which is connected to the handle body by a hinge in a state where it is inserted into a hole of the handle body, rotates on the hinge by a pressing action from the outside, and presses the operation lever to release compression of the press piece disposed on the cam member; a spring which connects the handle body and the cam member to elastically support rotation of the cam member by a tension force; and auxiliary pressing means which is mounted at the rear of the handle body and pushes the connection rod to subsidiarily compress the press piece compressed to the outer face of the side wall of the cookware.

Moreover, the auxiliary pressing means includes: a head part exposed to the rear face of the handle body; and a body part which extends from the center of the head part, rotatably moves in the forward and backward directions depending on rotation of the head part in a state where it is screw-coupled inside the handle body, so as to push the connection rod.

### [Description of Drawings]

FIG. 1 is a three-dimensionally exploded view showing configuration of a detachable handle for cookware according to a preferred embodiment of the present invention.
FIG. 2 is a sectional view of FIG. 1.
FIG. 3 is a view showing a state where the detachable handle for cookware is fixed to the cookware.

**<Explanation of reference numerals of essential parts>**

| | | | |
|---|---|---|---|
| 10: | handle body | 12: | retaining jaw |
| 20: | fixing means | 22: | operation lever |
| 24: | pin | 26: | cam member |
| 28: | hinge | 30: | press piece |
| 32: | connection rod | 38: | release button |
| 50: | auxiliary pressing means | 52: | head part |
| 54: | body part | 100: | cookware handle |
| 200: | cookware | | |

### [Best Mode]

The present invention is characterized by a detachable handle for cookware including: a handle body having a retaining jaw which is bent at the front end to be caught to an inner face of a side wall of a cookware; a cam member which is connected to the handle body by a hinge and has a press piece disposed at the front end in such a way as to be compressed to an outer face of the side wall of the cookware; an operation lever which is connected to an end of the cam member by a pin, pushes the pin-connected cam member while rotating on the pin depending on a pressing action from the outside in a state where the middle part of the operation lever is connected with the handle body by a connection rod, rotates the cam member on the hinge so that the press piece is compressed and fixed to the outer face of the side wall of the cookware; a release button which is connected to the handle body by a hinge in a state where it is inserted into a hole of the handle body, rotates on the hinge by a pressing action from the outside, and presses the operation lever to release compression of the press piece disposed on the cam member; a spring which connects the handle body and the cam member to elastically support rotation of the cam member by a tension force; and auxiliary pressing means which is mounted at the rear of the handle body and pushes the connection rod to subsidiarily compress the press piece compressed to the outer face of the side wall of the cookware.

### [Mode for Invention]

Hereinafter, reference will be now made in detail to the preferred embodiment of the present invention with reference to the attached drawings. The following detailed descriptions propose representative embodiments of the present invention to solve the technical problems. Additionally, other embodiments which can be proposed by the present invention will be substituted with description of the configuration of the present invention.

In the present invention, pressing means of a bolt structure is mounted on the rear of a handle body. After a press piece presses the outer surface of a side wall of cookware by rotation of a tilting lever, the press piece is separately pushed again using the pressing means, thus more firmly compressing and fixing the press piece which presses the outer surface of the side wall of the cookware.

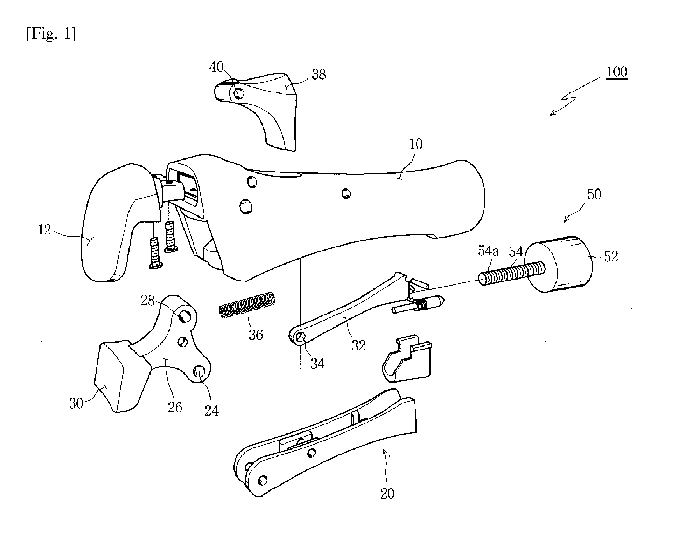

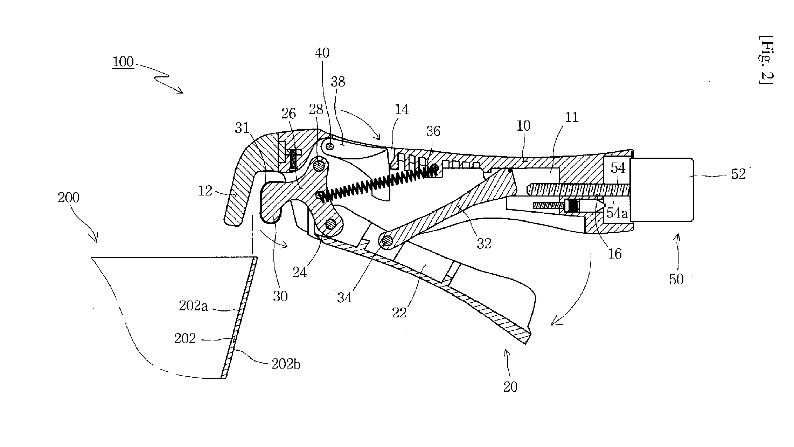

FIG. 1 is a three-dimensionally exploded view showing configuration of a detachable handle for cookware according to a preferred embodiment of the present invention, and FIG. 2 is a sectional view of FIG. 1.

As shown in FIGS. 1 and 2, the detachable handle 100 for cookware according to the preferred embodiment of the present invention includes: a handle body 10 of a predetermined length having a retaining jaw 12 which is downwardly bent on the front face thereof to be caught to an inner face 202a of a side wall 202 of a cookware 200; and a fixing means 20 mounted below the handle body 10 and compressed to an outer face 202b of the side wall 202 of the cookware 200 to fix the hand body 10 onto the cookware 200.

The fixing means 20 includes an operation lever 22, a connection rod 32, a cam member 26 and a release button 38.

The operation lever 22 is located at the lower end of the handle body 10, and the front end of the operation lever 22 is connected to one end of the cam member 26 by a pin 24 so as to rotate on the pin 24 depending on a pressing action from the outside and push the cam member 26 joined by the pin 24 while being inserted into the handle body 10. Therefore, the cam member 26 rotates on a central hinge 28 to compress the press piece 30, which is disposed at the other end, onto the outer face 202b of the side wall 202 of the cookware 200.

The connection rod 32 has an end which is fit into an insertion space 11 formed inside the handle body 10 and a front end which is connected to a central portion of the operation lever 22 by a pin 34 to support the operation lever 22.

The cam member 26 of the shape of " 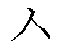 " has a structure that the middle part is connected with the handle body 10 by a hinge 28, one end is connected to the front end of the operation lever 22 by the pin 24, and the other end has the press piece 30 compressed to the outer face 202b of the side wall 202 of the cookware 200. In this instance, preferably, the outer face of the press piece 30 is surrounded by a silicon pad 31 so as to increase friction force while the press piece 30 compresses the outer face 202b of the side wall 202 of the cookware 200, thereby preventing slip.

The cam member 26 is pushed while the operation lever 22 is inserted into the handle body 10 by a pressing action from the outside, and in this instance, the cam member 26 rotates on the hinge 28 connected to the center so that the press piece 30 disposed at the other end is compressed to the outer face 202b of the side wall 202 of the cookware 200.

The spring 36 of which one end is fixed to the handle body 10 and of which the other end is fixed to the cam member 26 elastically supports the rotating action of the cam member 26. In the above state, when a user presses the release button 38, the operation lever 22 lowers while rotating on the pin 24 inside the handle body 10, and then, the cam member 26 is automatically returned to its initial state by a tension force.

The release button 38 is joined by a hinge 40 in a state where it penetrates a hole 14 formed in the upper face of the handle body 10, and rotates on the hinge 40 depending on external pressure to downwardly press the operation lever 22 disposed at the lower end of the handle body 10.

According to the pressing action of the release button 38, the operation lever 22 rotates on the pin 24 and is returned to its original state. In this process, the cam member 26 which is connected with the operation lever 22 by the pin 24 is pulled and rotates on the hinge using the tension force of the spring 36 at the same time so as to be returned to its original state. Accordingly, the press piece 30 compressed to the outer face 202b of the side wall 202 of the cookware 200 is released so that the handle 100 can be separated from the cookware 200.

In the meantime, the detachable handle 100 further includes auxiliary pressing means 50 mounted on the rear of the handle body 10.

The auxiliary pressing is generally in a bolt form, and preferably, includes: a head part 52 exposed to the rear face of the handle body 10; and a body part 54 which extends from the center of the head part 52, is screw-coupled to a coupling hole 16 formed inside the handle body 10, rotatably moves in the forward and backward directions depending on forward-and-reverse rotation of the head part 52 to pressurize and push an end of the connection rod 32 which is the fixing means 20.

The auxiliary pressing means 50 is used to compress the press piece 30, which is compressed to the outer face 202b of the side wall 202 of the cookware 200, by stronger pressure. Preferably, when the head part 52 which is the auxiliary pressing means 50 is rotated, the body part 54 screw-coupled inside the handle body 10 moves forward and pushes the connection rod 32 which is the fixing means 20. Accordingly, the operation lever 22 connected with the connection rod 32 by the pin 34 is also pushed to push the cam member 26 connected to the operation lever 22 by the pin 24 so that the press piece 30 disposed at the other end of the cam member 26 receives pressure of the auxiliary pressing means 50 to be compressed and fixed to the outer face 202b of the side wall 202 of the cookware 200 by stronger pressure.

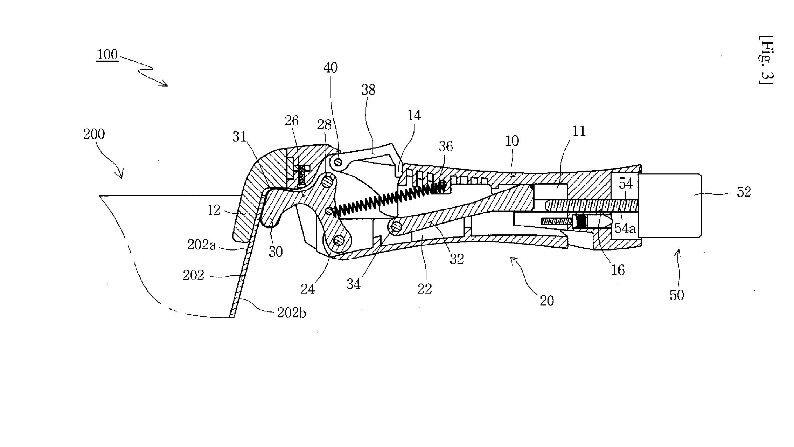

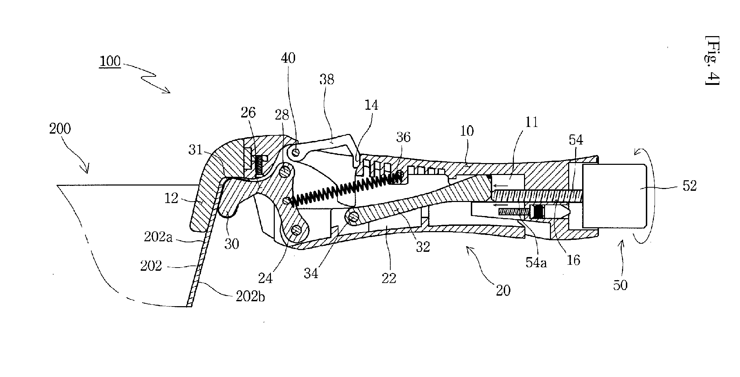

Hereinafter, referring to FIGS. 3 and 4, the operation of the detachable handle for cookware according to the present invention will be described.

First, in order to fix the handle 100 to the cookware 200, as shown in FIG. 3, the retaining jaw 12 of the handle body 10 is caught and held onto the inner face 202a of the side wall 202 of the cookware 200. After that, when the user presses the operation lever 22 with the hand, the operation lever 22 rotates on the pin 24, and pushes the cam member 26 connected by the pin 24 while being inserted into the handle body 10.

At the same time, the cam member 26 rotates on the hinge 28 at the center and compresses the press piece 30 disposed at the other end to the outer face 202b of the side wall 202 of the cookware 200 so as to fix the handle 100 to the cookware 200.

Meanwhile, as described above, in order to compress and fix the handle 100 fixed to the cookware 200 more firmly, as shown in FIG. 4, when the user rotates the head part 52 which is the auxiliary pressing means 50 mounted at the rear of the handle body 100, the body part 54 which is screw-coupled to the coupling hole 16 of the handle body 100 moves forward and pushes the connection rod 32 which is the fixing means 20. Accordingly, the operation lever 22 connected with the connection rod 32 by the pin 34 and pushes the cam member 26 connected to the operation lever 22 by the pin 24 so as to rotate the cam member 26 on the hinge 28 so that the press piece 30 disposed at the other end of the cam member 26 receives pressure of the auxiliary pressing means 50, thus being compressed and fixe to the outer face 202b of the side wall 202 of the cookware 200 by stronger pressure.

As described above, the detachable handle for cookware according to the preferred embodiment of the present invention can more firmly compress and fix the press piece by pushing and compressing the press piece, which compresses the outer face of the side wall of the cookware, by the auxiliary pressing means, thereby preventing a safety accident that the handle is separated during use and effectively compressing and fixing the handle even though the thickness of the side wall of the cookware is thin.

## Claims

1. A detachable handle for cookware comprising:
a handle body (10) having a retaining jaw (12) which is bent at the front end to be caught to an inner face (202a) of a side wall (202) of a cookware (200);
a cam member (26) which is connected to the handle body (10) by a hinge (28) and has a press piece (30) disposed at the front end in such a way as to be compressed to an outer face (202b) of the side wall (202) of the cookware (200);
an operation lever (22) which is connected to an end of the cam member (26) by a pin (34), pushes the pin-connected cam member (26) while rotating on the pin (34) depending on a pressing action from the outside in a state where the middle part of the operation lever (22) is connected with the handle body (10) by a connection rod (32), rotates the cam member (26) on the hinge (28) so that the press piece (30) is compressed and fixed to the outer face (202b) of the side wall (202) of the cookware (200);
a release button (38) which is connected to the handle body (10) by a hinge (40) in a state where it is inserted into a hole (14) of the handle body (10), rotates on the hinge (40) by a pressing action from the outside, and presses the operation lever (22) to release compression of the press piece (30) disposed on the cam member (26);
a spring (36) which connects the handle body (10) and the cam member (26) to elastically support rotation of the cam member (26) by a tension force; and
auxiliary pressing means (50) which is mounted at the rear of the handle body (10) and pushes the connection rod (32) to subsidiarily compress the press piece (30) compressed to the outer face (202b) of the side wall (202) of the cookware (200).

2. The detachable handle for cookware according to claim 1, wherein the auxiliary pressing means (50) comprises:
a head part (52) exposed to the rear face of the handle body (10); and
a body part (54) which extends from the center of the head part (52), rotatably moves in the forward and backward directions depending on rotation of the head part (52) in a state where it is screw-coupled inside the handle body (10), so as to push the connection rod (32).
